# EUROPÄISCHE PATENTSCHRIFT

(11) **EP 3 409 153 B1**
(45) Veröffentlichungstag und Bekanntmachung des Hinweises auf die Patenterteilung: **29.01.2020**
(21) Anmeldenummer: 18174163.8
(22) Anmeldetag: 24.05.2018
(51) Int. Cl.: A47J 31/44, B67D 1/12, G01F 23/292

(54) **GETRÄNKEGERÄT MIT FÜLLSTANDSMESSUNG**
BEVERAGE APPARATUS WITH FILLING LEVEL MEASUREMENT
APPAREIL À BOISSON À MESURE DE NIVEAU DE REMPLISSAGE

(30) Priorität: 30.05.2017 DE 102017209019
(43) Veröffentlichungstag der Anmeldung: 05.12.2018
(73) Patentinhaber: BSH Hausgeräte GmbH, 81739 München (DE)
(72) Erfinder: Schünemann, Axel, 83358 Seebruck (DE)

(56) Entgegenhaltungen:
- EP-A1- 2 770 307
- EP-A2- 3 026 404
- WO-A1-2006/063645
- DE-A1-102014 217 840
- DE-U1-202005 011 476

## Beschreibung

Die Erfindung betrifft ein Getränkezubereitungsgerät für Haushaltszwecke, insbesondere einen Kaffeevollautomaten, mit einer Tassenaufstellfläche zum Abstellen von Tassen oder anderen Getränkegefäßen während der Getränkezubereitung und mit einer Laserscanner-Einheit zur Erfassung der Anwesenheit und/oder des Füllstands eines Behälters auf der Tassenaufstellfläche.

Die DE 10 2014 217 840 zeigt einen Getränkespender mit einer Einrichtung zur Ermittlung eines Getränkefüllstands, mit einem Getränkeauslass zur Abgabe eines Getränks in Schwerkraftrichtung entlang einer z-Achse eines kartesischen Koordinatensystems, mit einer horizontalen Aufstellfläche, die unterhalb des Getränkeauslasses in einer x-y-Ebene des Koordinatensystems angeordnet ist, mit einem Sender, der in einer Projektionsrichtung eine Gerade in die x-y-Ebene der Aufstellfläche projiziert, mit einem Empfänger, der unter einem Winkel gegenüber der Projektionsrichtung auf die Aufstellfläche gerichtet ist und der Wiedergabeabschnitte derselben projizierten Gerade sowohl auf der Aufstellfläche als auch solche Wiedergabeabschnitte erfasst, die denen gegenüber in darüber liegenden parallelen Ebenen um einen Abstand parallel verschoben erscheinen, und mit einer Auswerteeinheit, die den Abstand zwischen den von dem Empfänger erfassten Wiedergabeabschnitten ermittelt und daraus einen Abstand zwischen den Ebenen in Richtung der z-Achse bestimmt.

Aufgabe der Erfindung ist es, die Erfassung der Anwesenheit und des Füllstands von Behältern eines Getränkezubereitungsgeräts zu verbessern.

Diese Aufgabe wird bei dem eingangs genannten Zubereitungsgerät erfindungsgemäß durch Mittel zur Erfassung des Füllstands und/oder zur Erfassung der Anwesenheit mehrerer benutzerseitig bedienbarer stationärer Behälter des Zubereitungsgeräts mit derselben Laserscanner-Einheit gelöst. Erfindungsgemäß wird also eine vorhandene und an sich bekannte Erfassungseinheit für weitere Erfassungsaufgaben genutzt. Die Erfindung macht sich dabei die Beobachtung zu Nutze, dass die Laserscanner-Einheit einen Strahlenfächer erzeugt, der in der Regel in einem Winkel von maximal etwa 90° aufgefächert ist, um die Tassenaufstellfläche in ihrer vollständigen Breite zu erfassen. Der übrige Winkelbereich kann erfindungsgemäß für die Erfassung weiterer Behälter und deren Füllstands genutzt werden. Dazu kann der Strahlenfächer aufgeweitet werden und sein dadurch gewonnener Winkelbereich erfindungsgemäß genutzt werden.

Als zu überwachende weitere Behälter kommen insbesondere benutzerseitig entnehmbare oder zumindest benutzerseitig befüllbare Behälter des Getränkezubereitungsgeräts in Frage. Derartige Behälter lassen sich beispielsweise mit Getränkezutaten füllen, wie etwa Frischwasser, beliebigen Arten von Getränkepulver, Milch oder dergleichen. Zu den nicht entnehmbaren, aber benutzerseitig befüllbaren Behältern können beispielsweise Bohnenbehälter gehören. Unter die zu überwachenden Behälter können auch solche Behälter fallen, die Reststoffe der Getränkezubereitung auffangen, insbesondere Restwasser oder beispielsweise Trester. Schließlich können auch Behälter erfasst werden, die Hilfsstoffe der Getränkezubereitung aufnehmen, die für die Getränkezubereitung selbst nicht zum Einsatz kommen, beispielsweise Reinigungsstoffe.

Erfindungsgemäß sind die Behälter während des Erfassungsvorgangs insofern stationär, als sie unbewegt an ihrem Bestimmungsort vorhanden sind, wenn sie und bzw. oder ihr Füllstand erfasst wird. Insofern kann auch die Erfassung an sich als stationär bezeichnet werden, weil für die Erfassung der Behälter oder ihres Füllstands keine Bewegung der Behälter erforderlich ist. Der Erfindung gelingt es also, eine bestehende Lasererfassungseinrichtung besser auszunutzen, so dass separate Erfassungseinrichtungen beispielsweise für einen Wasserbehälter, einen Milchtank oder eine Tresterschale entfallen können. Damit kann sich der Aufbau des Zubereitungsgeräts vereinfachen, was Kostenvorteile bietet.

Die Laserscanner-Einheit erfasst in der Regel Getränkebehälter und deren Füllstand. Nach einer weiteren vorteilhafter Ausgestaltung der Erfindung kann sie auch zur Erfassung zumindest der Anwesenheit von benutzerseitig entnehmbaren Gerätebestandteilen dienen, die nicht zwingend einen Behälter im obigen Sinne umfassen müssen. Bei Kaffeevollautomaten bietet es sich beispielsweise an, das Vorhandensein einer insbesondere zu Reinigungszwecken entnehmbaren Brüheinheit zu überprüfen. Deren Anwesenheit ist bei einer Getränkezubereitung nicht nur logisch zwingend erforderlich, sondern deren Abwesenheit würde auch zu einer unnötigen Verschmutzung des Geräteinneren des Kaffeevollautomaten führen.

Ein Strahlenfächer kann grundsätzlich durch eine schwenkbare Laserscanner-Einheit oder durch einen schwenkbaren Spiegel erzeugt werden, auf den ein Erfassungsstrahl der stationären Laserscanner-Einheit gerichtet ist. Nach einer weiteren vorteilhaften Ausgestaltung der Erfindung kann das Zubereitungsgerät optische Umlenkmittel für den Erfassungsstrahl der Laserscanner-Einheit in einem Winkelbereich jenseits des Strahlenfächers aufweisen, um weitere Behälter zu erfassen. Zu den optischen Umlenkmitteln kann auch ein vorhandener schwenkbarer Spiegel gehören, dessen Schwenkbereich über denjenigen für den bekannten Strahlenfächer hinaus vergrößert wird. Als weitere optische Umlenkmittel, die den Erfassungsstrahl außerhalb des bekannten Strahlenfächers nutzen, eigenen sich jedenfalls Spiegel, aber auch Prismen. Wegen des Laserstrahls als monochromatischem Licht können auch optische Gitter bzw. Beugungsgitter eingesetzt werden, die periodischen Strukturen zur Beugung des Lichts aufweisen. Zumindest durch Hintereinanderschalten mehrerer optischer Umlenkmittel kann der Erfassungsstrahl in nahezu jeden Bereich des Zubereitungsgeräts gelenkt werden, um dort Behälter bzw. Zustände zu erfassen. Dabei ist es nicht ausgeschlossen, sondern ebenfalls denkbar, auch die Laserscanner-Einheit selbst bewegbar zu gestalten. Jedenfalls können dadurch selbst entlegene Bereiche des Zubereitungsgeräts erreichbar werden.

Mittels optischer Umlenkmittel lässt sich der Erfassungsstrahl der Laserscanner-Einheit für die jeweilige Erfassungsaufgabe geeignet lenken. Solange lediglich die Anwesenheit eines Behälters oder einer Geräteeinheit erfasst werden soll, kann er aus nahezu jeder beliebigen Richtung auf die zu überwachende Geräteeinheit gerichtet werden. Die Anwesenheit der Geräteeinheit lässt sich dadurch ermitteln, dass ein Messwert für die Entfernung zwischen der Laserscanner-Einheit und der bestimmungsgemäß eingesetzten Geräteeinheit werkseitig erfasst und geräteseitig hinterlegt wird. Wird im Betrieb ein höherer Messwert erfasst, so deutet dies auf die Abwesenheit der überwachten Geräteeinheit hin. Die Auswertung der Erfassung kann dabei mit einer verhältnismäßigen hohen Toleranz belegt sein, sodass verschiedene, grundsätzlich funktionsfähige Einsetzpositionen der Geräteeinheit ohne Störungsmeldung akzeptiert werden können. Dadurch ergibt sich ein guter Bedienungskomfort, der in einer hohen Toleranzschwelle der Erfassungseinrichtung liegen kann. Die Erfassung mittels der Laserscanner-Einheit bietet also den Vorteil, dass ein Toleranzbereich in Abhängigkeit von der zu überwachenden Geräteeinheit werkseitig eingestellt und gegebenenfalls später noch nachjustiert werden kann.

Für die Erfassung eines Füllstands dagegen bietet sich eine Strahllenkung an, die den Erfassungsstrahl von einer Oberseite aus in ein oberseitig geöffnetes Gefäß richtet. Der Füllstand eines Milchbehälters beispielswese lässt sich auf diese Weise unmittelbar durch den Erfassungsstrahl detektieren. Nach einer vorteilhaften Ausgestaltung der Erfindung umfasst das Getränkegerät jedoch einen Schwimmer in einem Flüssigkeitsbehälter, der sich durch den Erfassungsstrahl der Laserscanner-Einheit erfassen lässt. Durch das Zusammenwirken von Erfassungsstrahl und Schwimmer lässt sich auch der Füllstand beispielsweise von Wasservorratsbehältern oder Restwasserschalen zuverlässig detektieren.

Für die Erfassung der Anwesenheit eines Behälters oder seines Füllstands genügt in der Regel ein einzelner Erfassungsstrahl. Denn bei der Erfassung eines Flüssigkeitsfüllstands kann von einer ebenflächigen Flüssigkeitsoberfläche ausgegangen werden, die an jedem beliebigen Punkt oder ggf. mithilfe eines Schwimmers korrekt erfasst werden kann. Nach einer vorteilhaften Ausgestaltung der Erfindung verfügt das Getränkezubereitungsgerät über Mittel zum Erzeugen eines zusätzlichen Strahlenfächers. Damit kann jenseits des vorhandenen Strahlenfächers und ggf. auch örtlich unabhängig von ihm eine Erfassung eines Linienprofils erreicht werden, die zur Erfassung eines Füllstands von Feststoffbehältern genutzt werden kann. Als solche können bei einem Kaffeevollautomaten beispielsweise der Tresterbehälter, der Bohnenbehälter für ungemahlene Kaffeebohnen oder ein Pulverfach für Getränkepulver dienen. Da sich darin in der Regel keine ebene Füllstoffoberfläche bildet, kann die Erfassung eines Linienprofils der Füllstoffoberfläche eine gute Näherung für die Abschätzung des Füllstands bieten. Der zusätzliche Laserfächer kann sich grundsätzlich über die vorhandenen Mittel zum Erzeugen des bekannten Strahlenfächers erzeugen lassen.

Alternativ oder zusätzlich kann das Getränkezubereitungsgerät nach einer weiteren vorteilhaften Ausgestaltung der Erfindung über zusätzliche Mittel zur Erzeugung des zusätzlichen Strahlenfächers verfügen. Dafür können zusätzliche schwenkbare Umlenkungsmittel oder eine schwenkbare Laserscanner-Einheit, sofern nicht schon vorhanden, oder Kombinationen daraus dienen. Dadurch lässt sich ggf. die Komplexität der Erfassungseinheit reduzieren, der zusätzliche Strahlenfächer jedenfalls aber präziser am jeweiligen Erfassungsort erzeugen.

Nach einer weiteren vorteilhaften Ausgestaltung der Erfindung kann das Getränkezubereitungsgerät über Mittel zur Bildung eines Mittelwerts aus einer Mehrzahl von gemessenen Entfernungswerten eines Strahlenfächers verfügen. Dazu werden die jeweiligen Messwerte jedes Erfassungsstrahls des Strahlenfächers summiert und durch die Anzahl der Erfassungsstrahlen dividiert. Der daraus erhaltene Mittelwert stellt eine gute Näherung für die Ermittlung der Füllhöhe des Behälters da, dessen Abmessung, insbesondere die seiner Grundfläche, bekannt sind.

Nach einer weiteren vorteilhaften Ausgestaltung der Erfindung verfügt das Getränkezubereitungsgerät über Mittel zur Ausbildung eines zweidimensionalen Strahlenfächers, beispielsweise um einen über mehreren Achsen schwenkbaren Spiegel oder über zwei hintereinander geschaltete Spiegel, die jeweils um eine Achsel schwenkbar sind, die aufeinander senkrecht stehen. Durch die Erfassung eines weiteren Linienprofils, das vorzugsweise orthogonal zum ersten Linienprofil verläuft, lässt sich die Füllstandsermittlung des erfassten Behälters durch die Bildung eines Profilkreuzes verbessern. Diese Methode liefert genauere Berechnungsergebnisse der relevanten Füllhöhe, weil sich zufällige Höhenabweichungen außerhalb des erfassten ersten Linienprofils zuverlässiger erfassen lassen. Eine Kreuzung der beiden Linienprofile muss nicht zwingend in der geometrischen Mitte des überwachten Feststoffbehälters liegen, sondern kann an dessen Befüllverhältnisse angepasst auch außerhalb der Mitte liegen. Denn im Bereich der Kreuzung ergibt sich die genaueste Erfassung der Oberfläche des Feststoffbehälters.

Nach einer weiteren vorteilhaften Ausgestaltung der Erfindung kann das Getränkezubereitungsgerät über Mittel zum Erzeugen eines Strahlenkegels verfügen. Denn mittels Strahlenkegel lässt sich die vollständige Topographie oder zumindest ein wesentlicher Teil der Füllstoffoberfläche des überwachten Feststoffbehälters erfassen. Daraus lässt sich der tatsächliche Füllstand am genauesten berechnen. Einzelheiten dazu sind der Anmeldung desselben Anmelders mit der Anmeldenummer 201604572 vom selben Tage zu entnehmen, die diesbezüglich zum Inhalt auch der vorliegenden Patentanmeldung gemacht wird. Nach einer weiteren vorteilhaften Ausgestaltung der Erfindung umfasst das Getränkezubereitungsgerät zu Erfassung des Füllstands von Kaffeepulver in einer Brühkammer. Dazu kann die Laserscanner-Einrichtung auf eine Öffnungs- und Befüllseite der Brühkammer gerichtet sein. Damit lassen sich nicht nur grundsätzliche Voraussetzungen für die Getränkezubereitung überprüfen, wie das Vorhandensein der Brüheinrichtung oder einen ausreichenden Frischwasserfüllstand. Vielmehr kann der Zubereitungsvorgang jedes Getränkebezugs hinsichtlich der korrekten Pulvermenge überwacht und gegebenenfalls nachjustiert werden. Einzelheiten dazu sind ebenfalls der obigen Anmeldung desselben Anmelders mit der Anmeldenummer 201604572 vom selben Tage zu entnehmen, die diesbezüglich zum Inhalt auch der vorliegenden Patentanmeldung gemacht wird.

Das Prinzip der Erfindung wird im Folgenden anhand einer Zeichnung beispielshalber noch näher erläutert. In der Zeichnung zeigen:
- Figur 1:: eine schematische Darstellung eines Kaffeevollautomaten,
- Figur 2:: eine schematische Wiedergabe eines Laserfächers samt überwachten Behältern,
- Figur 3:: eine Messwertdarstellung eines aufgenommenen Entfernungsprofils.

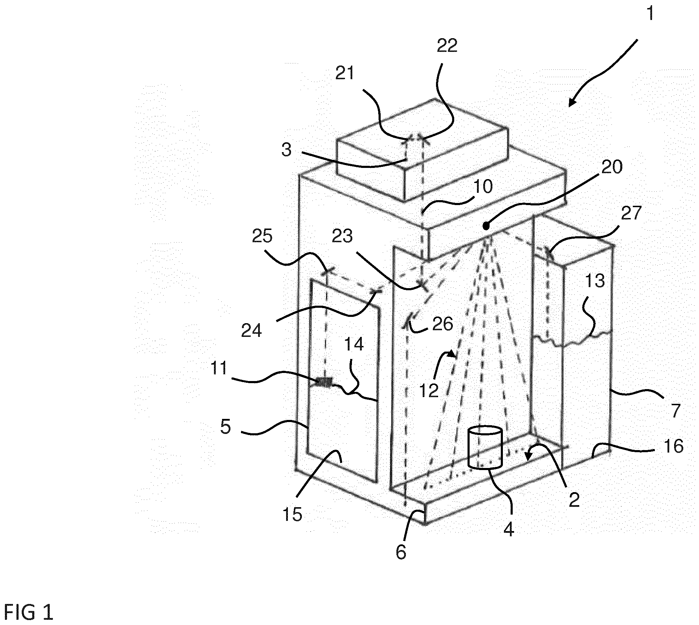

Figur 1 bietet eine schematische Wiedergabe eines Kaffeevollautomat 1 als Getränkezubereitungsgerät. Auf dessen einem Benutzer zugewandten Tassenaufstellfläche 2 lässt sich ein Getränkegefäß 4 unter einem nicht dargestellten Getränkeauslauf des Kaffeevollautomaten 1 abstellen. Für die Getränkezubereitung umfasst der Kaffeevollautomat 1 einen Frischwasserbehälter 5 mit einem Behälterboden 15 und infolge Befüllung mit einer Wasseroberfläche 14, der Brühwasser für kaffeebasierte Getränke liefert. Zur Zubereitung von Latte Macchiato, Cappuccino und dergleichen verfügt der Kaffeevollautomat 1 über einen Milchbehälter 7 mit einem Behälterboden 16 und bei Befüllung mit einer Flüssigkeits- bzw. Milchoberfläche 13. Der Milchbehälter 7 kann seitlich an dem Kaffeevollautomaten 1 angedockt werden. Restwasser aus der Kaffeezubereitung, aber auch ein auf der Tassenaufstellfläche 2 verschüttetes Getränk nimmt eine Tropfschale 6 auf, die unter der Tassenaufstellfläche 2 angeordnet ist. Sowohl der Frischwasserbehälter 5, als auch die Tropf- oder Restwasserschale 6, als auch der Milchbehälter 7 lassen sich vom Kaffeevollautomaten 1 abnehmen, um befüllt oder geleert zu werden. Sowohl ihr Vorhandensein als auch ein ausreichender hoher Füllstand im Frischwasserbehälter 5 und im Milchbehälter 7 sowie ein ausreichend geringer Füllstand in der Restwasserschale 6 sind für einen erfolgreichen Zubereitungsvorgang erforderlich.

Der Kaffeevollautomat 1 enthält eine an sich bekannte Laserscanner-Einheit 3, die über drei Umlenkspiegel 21, 22, 23 auf einen schwenkbaren Zentralspiegel 20 wirkt. Mit dessen Hilfe wird ein Strahlen- oder Laserfächer 12 auf die Tassenaufstellfläche 2 gerichtet, um dort das Getränkegefäß 4 zu erfassen. Denn das Gefäß 4 kann - wie dargestellt - zentral abgestellt sein oder aber links oder rechts davon. Demzufolge könnte der Getränkeauslass erfolgreich auf das Getränkegefäß 4 gerichtet sein oder daneben liegen. Ist das Getränkegefäß 4 korrekt positioniert, soll sein Füllstand überwacht werden, um ein Überfüllen und damit ein Überlaufen des Getränkegefäßes 4 zu verhindern. All diese Informationen lassen sich wunschgemäß mit Hilfe des Laserfächers 12 in an sich bekannter Weise gewinnen und ggf. zu Benutzeranweisungen verarbeiten.

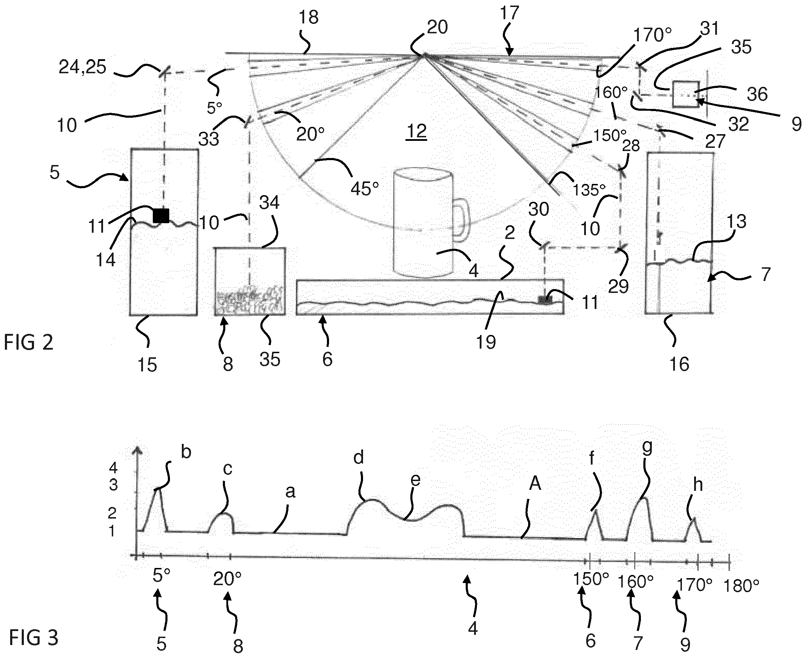

Erfindungsgemäß verfügt der Kaffeevollautomat 1 über weitere Umlenkspiegel 24 ... 27 (bzw. 24 ... 33 gemäß Figur 2). Damit lassen sich einzelne Laserstrahlen 10 außerhalb des Laserfächers 12 auf die Behälter 2, 5, 6, 7 richten. Ausgehend vom Zentralspiegel 20 lenkt der Umlenkspiegel 27 einen Strahl in den Milchbehälter 7 und dort auf die Milchoberfläche 13, sie sich unmittelbar detektieren lässt. Daraus gewinnt der Kaffeevollautomat 1 einen Entfernungswert, der zusammen mit einem bekannten und geräteseitig hinterlegten Entfernungswert für den Behälterboden 16 zu einem Wert für den Füllstand des Milchbehälters 7 verarbeitet wird. Ein höherer Entfernungswert dagegen wird als das Fehlen des Milchbehälters 7 ausgewertet und zu einer entsprechenden Meldung an den Benutzer des Kaffeevollautomaten 1 verarbeitet.

Die Umlenkspiegel 24, 25 lenken einen weiteren Strahl 10 in den Frischwasserbehälter 5, wo er auf einen Schwimmer 11 auf der Wasseroberfläche 14 trifft. Während sich die opake Milchoberfläche 13 mittels Laser unmittelbar erfassen lässt, ist für die Erfassung der Wasseroberfläche 14 im Frischwasserbehälter 5 der Schwimmer 11 notwendig. Er ist in einem nichtdargestellten Führungsrohr geführt, das mit der Anordnung des Umlenkspiegels 25 korreliert, sodass der Strahl 10 zuverlässig auf den Schwimmer 11 trifft, solange der Wasserbehälter 5 eingesetzt ist.

Der in den Frischwasserbehälter 5 gelenkte Laserstrahl führt zu einer Entfernungsgröße, die die relative Lage des Schwimmers 11 gegenüber der Laserscanner-Einheit 3 als Entfernungswert angibt. Der Entfernungswert für einen auf dem Behälterboden 15 liegenden Schwimmer 11 bei leerem Frischwasserbehälter 5 ist bekannt und geräteseitig hinterlegt. Davon ausgehend kann der aktuell gemessene Wert ausgewertet werden: ein kleinerer Entfernungswert deutet auf eine Befüllung des Frischwasserbehälters 5 hin und lässt folglich auf einen Füllstand schließen. Ein größerer Entfernungswert bedeutet, dass der Frischwasserbehälter 5 nicht eingesetzt ist und damit eine größere Entfernung zu einem Referenzpunkt unterhalb des Schwimmers 11 bei eingesetztem, aber leerem Frischwasserbehälter 5 gemessen wird.

Der Umlenkspiegel 26 richtet einen weiteren Laserstrahl 10 auf die Restwasserschale 6. Trifft er dort auf eine Referenzfläche, die unabhängig von einem eventuellen Füllstand ist, und deren Entfernung zur Laserscanner-Einheit 3 bekannt ist, so lässt sich auf die Anwesenheit der Restwasserschale 6 schließen. Wird ein dem gegenüber größerer Wert gemessen, fehlt vermutlich die Restwasserschale 6, woraufhin eine entsprechende Meldung an den Benutzer des Kaffeevollautomaten 1 ausgegeben wird.

Damit gelingt es, mit nur einer einzigen Laserscanner-Einheit 3, die zunächst nur für die Überwachung und Erfassung eines Füllstands eines Getränkegefäßes 4 vorgesehen ist, weitere Behälter 2, 5, 6 ,7 des Kaffeevollautomaten 1 sowohl auf ihr Vorhandensein, als auch auf ihren Füllstand hin auszuwerten. Damit lassen sich ohne großen konstruktiven Aufwand entsprechende Detektoren einsparen, was die Herstellung des Kaffeevollautomaten 1 kostengünstiger macht.

Figur 2 stellt schematisch den in herkömmlicher Weise genutzten Strahlenfächer 12 da, der sich unterhalb des Zentralspiegels 20 aufspannt. Er ist als Teil eines Halbkreises 17 mit einer Nulllinie 18 dargestellt, auf dem zumindest theoretisch mögliche Schwenkwinkel des Zentralspiegels 20 zwischen 0° und 180° angegeben sind. Der herkömmlich genutzte Schwenkbereich des Zentralspiegels 20 liegt zwischen 45° und 135° und überstreicht damit 90°. Seine verbleibenden, bislang ungenutzten Abschnitte liegen zwischen 0° und 45 ° bzw. zwischen 135° und 180°. Erfindungsgemäß werden sie nun für die Überwachung und Erfassung weiterer Behälter 5 bis 9 genutzt, womit zusätzlich zu Figur 1 auch ein Tresterbehälter 8 und eine Pulverschublade 9 erfasst werden:
Der um 5° gegenüber der Nulllinie 18 abgelenkte Strahl 10 trifft auf die Spiegel 24, 25 und damit auf den Schwimmer 11 im Wasservorratstank 5, wonach sein Entfernungswert in der beschriebenen Weise ausgewertet wird. Bei etwa 20° trifft der Laserstrahl 10 auf den Umlenkspiegel 33, der ihn in den Tresterbehälter 8 lenkt. Ermittelt er dort einen geringeren Wert als einen geräteseitig für den leeren Tresterbehälter 8 hinterlegten Wert, ist der Tresterbehälter 8 befüllt. Ermittelt er einen geringeren Wert als einen Entfernungswert, der für die Höhenlage eines Behälterrands 34 des Tresterbehälters 8 steht, ist der Tresterbehälters 8 voll und muss geleert werden. Dafür wird eine entsprechende Meldung ausgegeben.

Zwischen 45° und 135° spannt sich der an sich bekannte Laserfächer 12 auf, um ein Getränkegefäß 4 auf der Tassenabstellfläche 2 nach Position und Füllstand zu erfassen.

Bei einer Umlenkung durch den Zentralspiegel 20 um ca. 150° trifft der Laserstrahl 10 auf die Umlenkspiegel 28, 29, 30, die ihn auf einen weiteren Schwimmer 11 richten, der auf einem Flüssigkeitsspiegel 19 in der Tropfschale 6 schwimmt. Der Schwimmer 11 ist in gleicher Weise wie jener des Frischwasserbehälters 5 geführt, um mit dem Spiegel 30 zusammenzuwirken und erfasst zu werden, sobald die Tropfschale 6 im Kaffeevollautomaten 1 (vgl. Figur 1) eingesetzt ist. Bei ca. 160° lenkt der Umlenkspiegel 27 den Laserstrahl 10 in den Milchbehälter 7 und auf die dortige Oberfläche 13. Bei 175° schließlich trifft der Laserstrahl 10 auf die Umlenkspiegel 31 und 32, die ihn seitlich auf die Pulverschublade 9 lenken. Da die Pulverschublade 9 Kaffeepulver für nur eine einzige Getränkeportion aufnehmen kann, genügt die Erfassung der Anwesenheit von Getränkepulver an sich, ohne einen konkreten Füllstand ermitteln zu müssen. Daher lässt sich der Laserstrahl 10 bei 175° in der Art einer Lichtschranke einsetzen, wonach die eingesetzte, aber leere Pulverschublade 9 anhand eines ersten und geräteseitig hinterlegten Abstandswerts detektiert werden kann Dazu durchtritt der Laserstrahl 10 bei 175° eine Seitenwand 35 der Pulverschublade 9 durch eine durchsichtige Scheibe, um bei leerer Pulverschublade 9 auf eine gegenüberliegende Seitenwand 36 zu treffen. Das Fehlen der Pulverschublade 9 wird mit einem größeren Messwert und ihre Befüllung anhand eines geringeren Messwerts ermittelt. Da der Laserstrahl 10 bei 175° von einer Seite aus auf die Pulverschublade 9 trifft, stellt der gemessene geringere Entfernungswert lediglich eine qualitative, aber keine quantitative Angabe über den Füllstand der Pulverschublade 9 dar.

Figur 3 gibt die Ergebnisse einer Messreihe einer Schwenkung des Zentralspiegels 20 von 0° bis 180° wieder. Auf der Abszisse sind demzufolge seine Schwenkwinkel zwischen 0° und 180° angegeben, auf der Ordinate die ermittelten Entfernungswerte. Es ergibt sich eine stetige Messlinie A mit einem Basiswert a, der das Vorhandensein der überwachten Behälter 5 ... 9 repräsentiert. Der Basiswert a ist werkseitig ermittelt und im Kaffeevollautomaten 1 hinterlegt. Sein Unterschreiten würde bedeuten, dass einer der Behälter 5 ... 9 nicht vorhanden wäre.

Der Ausschlag der Messlinie A bei 5° mit dem Messwert b zeigt den Füllstand des Frischwasserbehälters 5 bei ca. drei Einheiten auf der Ordinate. Der Tresterbehälter 8 ist bei 20° erfasst und liefert als Füllstand den Messwert c von ca. zwei Einheiten. Anschließend ist der bekannte Strahlenfächer 12 erreicht, der bei seinem Auftreffen auf der Tassenaufstellfläche 2 den Basiswert a liefert. Bei Existenz eines Getränkebehälters 4 ergibt sich ein Messwert d für einen Behälterrand und ein demgegenüber geringerer Messwert e für den Füllstand im Behälter 4. Jenseits der Auslenkung von 135° werden weitere Behälter überwacht, so bei 150° die Tropfschale 6 mit einem Messwert f für einen Flüssigkeitsstand von ca. zweieinhalb Einheiten. Der Milchbehälter 7 führt zu einem Messwert g von ca. drei Einheiten. Der letzte Messwert h für die Pulverschublade 9 wird nicht seiner Höhe nach ausgewertet, sondern gibt lediglich einen Hinweis darauf, dass die Pulverschublade 9 mit Kaffeepulver gefüllt ist und daher eine Brühkammer für den nächsten Zubereitungsvorgang daraus zu speisen ist.

Da es sich bei den vorhergehenden, detailliert beschriebenen Kaffeevollautomaten um ein Ausführungsbeispiel handelt, kann er in üblicher Weise vom Fachmann in einem weiten Umfang modifiziert werden, ohne den Bereich der Erfindung zu verlassen. Insbesondere können auch die konkreten Anordnungen der Umlenkspiegel in anderer Form als in der hier beschriebenen folgen. Ebenso kann der Zentralspiegel selbst oder seine Position in einer anderen Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrmals oder mehrfach vorhanden sein können.

### Bezugszeichenliste:

- 1: Kaffeevollautomat
- 2: Tassenaufstellfläche
- 3: Laserscanner-Einheit
- 4: Getränkegefäß
- 5: Frischwasserbehälter
- 6: Restwasserschale
- 7: Milchbehälter
- 8: Tresterbehälter
- 9: Pulverschublade
- 10: Laserstrahl
- 11: Schwimmer
- 12: Strahlenfächer
- 13: Milchoberfläche
- 14: Wasseroberfläche
- 15: Behälterboden
- 16: Behälterboden
- 17: Halbkreis
- 18: Nulllinie
- 19: Restwasseroberfläche
- 20: Zentralspiegel
- 21 bis 33: Umlenkspiegel
- 34: Behälterrand des Tresterbehälters 8
- 35: Seitenwand der Pulverschublade 9
- 36: Seitenwand

- a: Basiswert
- b ... h: Messwerte

- A: Messlinie

## Patentansprüche

1. Getränkezubereitungsgerät für Haushaltszwecke, insbesondere Kaffeevollautomat (1), mit einer Tassenaufstellfläche (2), mit einer Laserscannereinheit (3) zur Erfassung der Anwesenheit und/oder des Füllstands eines Behälters (4) auf der Tassenaufstellfläche (2), **gekennzeichnet durch** Mittel zur Erfassung des Füllstands und/oder der Anwesenheit mehrerer benutzerseitig bedienbarer stationärer Behälter (5 ... 9) des Zubereitungsgeräts (1) mit derselben Laserscannereinheit (3).

2. Getränkezubereitungsgerät nach Anspruch 1, **gekennzeichnet durch** Mittel zur Erkennung der Anwesenheit von benutzerseitig bedienbaren Gerätebestandteilen.

3. Getränkezubereitungsgerät nach Anspruch 1 oder 2, **gekennzeichnet durch** optische Umlenkungsmittel (20,..., 32) für einen Strahl (10) der Laserscannereinheit (3).

4. Getränkezubereitungsgerät nach einem der obigen Ansprüche, **gekennzeichnet durch** einen Schwimmer (11) in einem Flüssigkeitsbehälter (5; 6), der mittels der Laserscannereinheit (3) detektierbar ist.

5. Getränkezubereitungsgerät nach einem der obigen Ansprüche, **gekennzeichnet durch** Mittel zum Erzeugen eines zusätzlichen Strahlenfächers.

6. Getränkezubereitungsgerät nach Anspruch 5 **gekennzeichnet durch** schwenkbare optische Umlenkungsmittel (20).

7. Getränkezubereitungsgerät nach einem der Ansprüche 5 oder 6, **gekennzeichnet durch** Mittel zur Bildung eines Mittelwerts aus einer Mehrzahl von gemessenen Entfernungswerten.

8. Getränkezubereitungsgerät nach einem der Ansprüche 5 bis 7, **gekennzeichnet durch** Mittel zur Ausbildung eines zweidimensionalen Strahlenfächers

9. Getränkezubereitungsgerät nach einem der obigen Ansprüche, **gekennzeichnet durch** Mittel zur Ausbildung eines Strahlenkegels.

10. Getränkezubereitungsgerät nach einem der obigen Ansprüche, **gekennzeichnet durch** Mittel zur Erfassung des Füllstands von Kaffeepulver in einer Brühkammer.

## Claims

1. Beverage preparation appliance for household purposes, in particular fully automatic coffee machine (1), with a cup placement surface (2), with a laser scanning unit (3) for capturing the presence and/or the fill state of a container (4) on the cup placement surface (2), **characterised by** means for capturing the fill state and/or the presence of a plurality of stationary containers (5 ... 9), which can be operated on the part of the user, of the preparation appliance (1) by way of the same laser scanning unit (3).

2. Beverage preparation appliance according to claim 1, **characterised by** means for capturing the presence of appliance components which can be operated on the part of the user.

3. Beverage preparation appliance according to claim 1 or 2, **characterised by** optical deflection means (20, ..., 32) for a beam (10) of the laser scanning unit (3).

4. Beverage preparation appliance according to one of the preceding claims, **characterised by** a float (11) in a liquid container (5;6), which is able to be detected by means of the laser scanning unit (3).

5. Beverage preparation appliance according to one of the preceding claims, **characterised by** means for generating an additional fan beam.

6. Beverage preparation appliance according to claim 5, **characterised by** pivotable optical deflection means (20).

7. Beverage preparation appliance according to one of claims 5 or 6, **characterised by** means for forming an average from a plurality of measured distance values.

8. Beverage preparation appliance according to one of claims 5 to 7, **characterised by** means for embodying a two-dimensional fan beam.

9. Beverage preparation appliance according to one of the preceding claims, **characterised by** means for embodying a beam cone.

10. Beverage preparation appliance according to one of the preceding claims, **characterised by** means for capturing the fill state of coffee powder in a brewing chamber.

## Revendications

1. Appareil de préparation de boissons à des fins domestiques, en particulier machine à café intégralement automatique (1), avec une surface de dépose pour tasse (2), avec une unité de scanner laser (3) pour la saisie de la présence et/ou du niveau de remplissage d'un contenant (4) sur la surface de dépose pour tasse (2), **caractérisé par des** moyens pour la saisie du niveau de remplissage et/ou de la présence de plusieurs contenants stationnaires utilisables par un utilisateur (5 ... 9) de l'appareil de préparation (1) avec ladite unité de scanner laser (3).

2. Appareil de préparation de boissons selon la revendication 1, **caractérisé par** des moyens pour la détection de la présence de composants d'appareil utilisables par l'utilisateur.

3. Appareil de préparation de boissons selon la revendication 1 ou 2, **caractérisé par** des moyens de déviation optique (20,..., 32) pour un faisceau (10) de l'unité de scanner laser (3).

4. Appareil de préparation de boissons selon l'une des revendications précédentes, **caractérisé par** un flotteur (11) dans un contenant à liquide (5 ; 6), détectable au moyen de l'unité de scanner laser (3).

5. Appareil de préparation de boissons selon l'une des revendications précédentes, **caractérisé par** des moyens pour la génération d'un éventail de rayons supplémentaire.

6. Appareil de préparation de boissons selon la revendication 5, **caractérisé par** des moyens de déviation optiques pivotants (20).

7. Appareil de préparation de boissons selon l'une des revendications 5 ou 6, **caractérisé par** des moyens pour l'établissement d'une valeur moyenne au départ d'une pluralité de valeurs d'éloignement mesurées.

8. Appareil de préparation de boissons selon l'une des revendications 5 à 7, **caractérisé par** des moyens pour la constitution d'un éventail de rayons en deux dimensions.

9. Appareil de préparation de boissons selon l'une des revendications précédentes, **caractérisé par** des moyens pour la constitution d'un cône de rayons.

10. Appareil de préparation de boissons selon l'une des revendications précédentes, **caractérisé par** des moyens pour la saisie du niveau de remplissage en café en poudre dans une chambre d'échaudage.
